# EUROPEAN PATENT SPECIFICATION

(11) **EP 3 964 910 B1**
(45) Date of publication and mention of the grant of the patent: **25.10.2023**
(21) Application number: 21189574.3
(22) Date of filing: 04.08.2021
(51) Int. Cl.: G05D 1/00, E02F 3/96, E02F 9/26

(54) **WORK SUPPORT SYSTEM FOR WORK MACHINE**
ARBEITSUNTERSTÜTZUNGSSYSTEM FÜR ARBEITSMASCHINE
SYSTÈME DE SUPPORT DE TRAVAIL POUR MACHINE DE TRAVAIL

(30) Priority: 11.08.2020 JP 2020135762
(43) Date of publication of application: 09.03.2022
(73) Proprietor: KOBELCO CONSTRUCTION MACHINERY CO., LTD., Hiroshima-shi Hiroshima 731-5161 (JP)
(72) Inventor: FUKUDA, Tomohiro, Hiroshima-shi, 731-5161 (JP); EITA, Akihiko, Hiroshima-shi, 731-5161 (JP)
(74) Representative: TBK

(56) References cited:
- EP-A1- 3 409 849
- US-A1- 2018 141 658

## Description

### Technical Field

The present invention relates to a system for supporting work of a work machine.

### Background Art

When an image capture device for work support is mounted on an upper turning body of a work machine such as an excavator, there remains a space of which the image capture device fails to capture any image. In order to capture the image of such a remaining space, document WO 2017/131 194 A1 discloses mounting an image capture device on a flying object.

In this technique, when a hovering control is executed to keep the flight position of the flying object at the target flight position, the movement of image capture object, for example, the movement of the location where the work is actually performed by the work machine, causes the necessity of changing the target flight position of the flying object. High frequency of such changes may cause an increase in the load of processing necessary for the control or shortening the life of a battery mounted on the flying object.

Document EP 3 409 849 A1 discloses an excavator and an autonomous flying body to fly around the excavator. The excavator includes a lower traveling body, an upper turning body mounted on the lower traveling body, and a receiver, a direction detecting device, a controller, and a display device mounted on the upper turning body. The receiver receives an image captured by an aerial vehicle, the direction detecting device detects a direction of the excavator, the controller generates information related to a target rotation angle of the aerial vehicle based on the direction of the excavator, and the display device displays the captured image in the same direction as a direction of an image that is captured when the aerial vehicle rotates by a target rotation angle.

### Summary of Invention

It is an object of the present invention to provide an improved system for supporting work of a work machine, the system including a flying object and an image capture device mounted on the flying object and being capable of continuously capturing an image of a specific place with low frequency of changing the flight state of the flying object.

This object is achieved by a system for supporting work of a work machine according to claim 1. Advantageous further developments are as set forth in the dependent claims.

Provided is a system for supporting work of a work machine including a work support apparatus for supporting work performed by a work machine that includes a lower traveling body and an upper turning body mounted on the lower traveling body. The work support apparatus includes a flying object, an image capture device, an information acquisition unit, an image capture target position calculation unit, an image capture condition setting unit, a flying object control unit, and a flight control command unit. The flying object is capable of flying over the air. The image capture device is mounted on the flying object and captures an image of the work machine. The information acquisition unit acquires work machine information that is information on a state of the work machine and flying object information that is information on a state of the flying object. The image capture target position calculation unit calculates the position of an image capture target to be imaged by the image capture device. The image capture condition setting unit sets an image capture condition of the image capture device so as to allow an image of the image capture target that is located at the image capture target position to be captured. The image capture condition is at least one of an image capture view angle and an image capture direction. The flying object control unit is capable of performing hovering control to keep the flying object in a target flight state based on the flying object information acquired by the information acquisition unit. The flight control command unit imparts a control command to the flying object control unit based on the work machine information and the flying object information, which are acquired by the information acquisition unit, and the image capture target position. The flight control command unit is configured to judge whether or not it is possible to determine a new image capture condition for making the image capture target position contained within the image capture area without changing the target flight state when the image capture target position calculated by the image capture target position calculation unit is deviated or predicted to be deviated from the image capture area of the image capture device during execution of the hovering control by the flying object control unit, and configured to make the image capture condition setting unit change the actual image capture condition into the new image capture condition and to make the flying object control unit maintain the current target flight state when judging that it is possible to determine the new image capture condition.

### Brief Description of Drawings

FIG. 1 is a diagram showing a work machine and a work support apparatus therefor according to an embodiment of the present invention.
FIG. 2 is a diagram showing an example of hardware of a control system of the work machine.
FIG. 3 is a block diagram showing respective functions actualized by a control device mounted on the work machine, a control device mounted on an unmanned plane, and an image capture control device.
FIG 4A is a diagram showing the change in the image capture view angle of the image capture device corresponding to the change in the image capture target position during the execution of the hovering control and showing the change in the image capture area of the image capture device corresponding to the image capture view angle.
FIG 4B is a diagram showing the change in the image capture direction corresponding to the change in the image capture target position during the execution of the hovering control and showing the change in the image capture area of the image capture device corresponding to the image capture direction.
FIG. 5 is a flowchart showing a first example of a control executed in the embodiment.
FIG. 6 is a flowchart showing a second example of a control executed in the embodiment.

### Description of Embodiments

Hereinafter will be described a preferred embodiment of the present invention in detail with reference to the attached drawings.

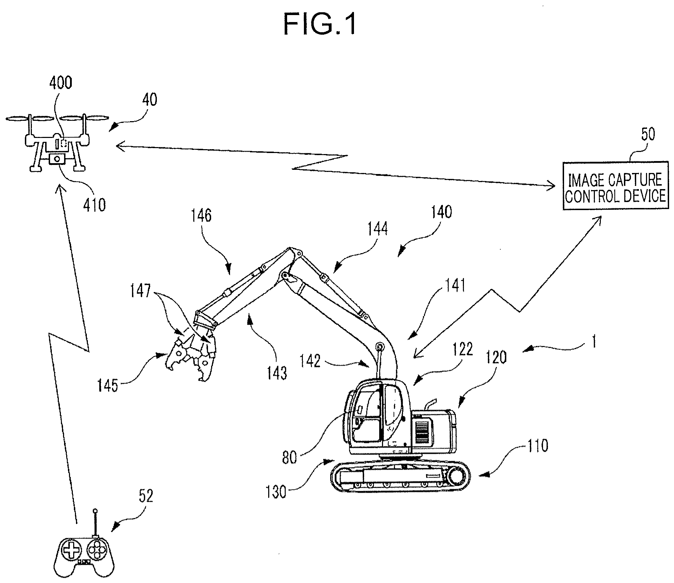

FIG. 1 shows a work machine 1 and ancillary equipment for supporting the work performed by the work machine 1 according to the embodiment of the present invention. The ancillary equipment includes an unmanned plane 40, an image capture control device 50, and a remote operation device 52.

The work machine 1 performs certain work in cooperation with the unmanned plane 40. The work machine 1 includes a crawler-type lower traveling body 110, an upper turning body 120 which is mounted on the lower traveling body 110 so as to be turnable by a turning mechanism 130, and a work mechanism 140. The upper turning body 120 includes a cab (operation chamber) 122 located on the front and left part thereof. The work mechanism 140 is supported on the front center part of the upper turning body 120. The work machine 1 may include, for example, a basement which the unmanned plane 40 takes off from and lands on.

The work mechanism 140 includes a boom 141, an arm 143, a crusher 145, and a plurality of hydraulic cylinders. The boom 141 is mounted on the upper turning body 120 so as to be raiseable and lowerable. The arm 143 is rotatably connected to the distal end of the boom 141. The crusher 145 is a tip attachment which is rotatably attached to the distal end of the arm 143. In place of the crusher 145, may be attached other tip attachment, for example, a bucket, to the distal end of the arm 143. The plurality of hydraulic cylinders include a boom cylinder 142, an arm cylinder 144, a bucket cylinder 146 and a crusher cylinder 147, and each of the plurality of hydraulic cylinders is expanded and contracted by supply of hydraulic fluid thereto. The boom cylinder 142 is interposed between the boom 141 and the upper turning body 120 so as to move the boom 141 rotationally in rising and falling directions through the expansion and contraction of the boom cylinder 142. The arm cylinder 144 is interposed between the arm 143 and the boom 141 so as to move the arm 143 to the boom 141 rotationally about a horizontal axis through the expansion and contraction of the arm cylinder 144. The bucket cylinder 146 is interposed between the crusher 145 and the arm 143 so as to move the tip attachment, namely, the crusher 145 in this embodiment, to the arm 143 rotationally about a horizontal axis through the expansion and contraction of the bucket cylinder 146. The crusher cylinder 147 is attached to the crusher 145 so as to open and close the crusher 145 through expansion and contraction of the crusher cylinder 147.

The unmanned plane 40 is a rotorcraft, including a plurality of blades, an actuator for rotating the plurality of blades, for example, an electric motor, and a battery for supplying power to the actuator and the like. The number of the plurality of blades is, for example, 4, 6 or 8. In place of or in addition to the battery, may be provided a power supply cord that connects the unmanned plane 40 to a ground power source.

On the unmanned plane 40, mounted are a control device 400 and an image capture device 410.

The control device 400 actualizes a plurality of flight forms of the unmanned plane 40 in accordance with control information and a control command input from the image capture control device 50 and operation information input from the remote operation device 52. The plurality of flight forms include forward flight, backward flight, climb, descent, and hovering. The hovering is a flight form in which the flight position and the flight attitude of the unmanned plane 40 are kept at the target flight position and the target flight attitude, respectively, that is, a form in which the unmanned plane 40 is kept stationary in the air. The image capture device 410 captures an image to be provided to an operator of the work machine in order to support the work performed by the work machine 1, the image being an image of an area ahead of the unmanned plane 40. The control device 400 transmits the thus captured image to the work machine 1.

The image capture device 410 includes a camera which is an image capture device body. The type and the like of the camera are arbitrary; it may be, for example, a wide-angle camera. The image capture device 410 may be either removably attached to the unmanned plane 40 or rigidly fixed to the unmanned plane 40. The image capture device 410 captures a frontward environmental image, which is an image of the area ahead of the body of the unmanned plane 40, by use of a image capture element such as a CCD (charge-coupled device) or CMOS (complementary metal oxide semiconductor. The image capture device 410, for example, may be configured to capture the frontward environment image in real time and to supply it to the control device 400 in a stream format with a predetermined frame period. The image capture device 410, preferably, further includes a not-graphically-shown gimbal, i.e., a turning table. The gimbal rotates the image capture device body relatively to the unmanned plane 40 so as to keep the orientation of the optical axis of the image capture device body of the image capture device 410 constant (e.g., a predetermined direction in the horizontal plane) regardless of the change in the attitude of the unmanned plane 40.

The image capture control device 50 executes controls for image capture by the image capture device 410 with the flight of the unmanned plane 40. The image capture control device 50 is composed by, for example, a server computer; in this case, the image capture control device 50 is connected to the work machine 1 and the unmanned plane 40 so as to be communicable therewith via a not-graphically-shown network. The network may include a wireless communication network, the Internet, a VPN (Virtual Private Network), a WAN (Wide Area Network), a wired network, or any combination thereof. At least a part of the functions of the image capture control device 50 may be included in the control device 10 mounted on the work machine 1. Alternatively, at least a part of the components of the image capture control device 50 may be included in the control device 400 mounted on the unmanned plane 40. Alternatively, at least a part of the functions of the image capture control device 50 may be distributed to at least two of the server, the control device 10 mounted on the work machine 1, and the control device 400 mounted on the unmanned plane 40.

The remote operation device 52 is, for example, a remote controller, being operable by a user. The user may be either an operator who operates the work machine 1 or another worker. The user, if being an operator who operates the work machine 1, may bring the remote operation device 52 into the cab 122. The remote operation device 52 is capable of wireless communication with the unmanned plane 40 and transmits an operation signal, which corresponds to an operation applied to the remote operation device 52 by the user, toward the unmanned plane 40. When receiving the operation signal from the remote operation device 52, the control device 400 mounted on the unmanned plane 40 performs a control for actualizing the movement of the unmanned plane 40 corresponding to the operation information included in the operation signal, the movement being forward, backward, upward, downward or the like. The remote operation device 52 is optional. The remote operation device 52 may be formed of a smart phone or the like.

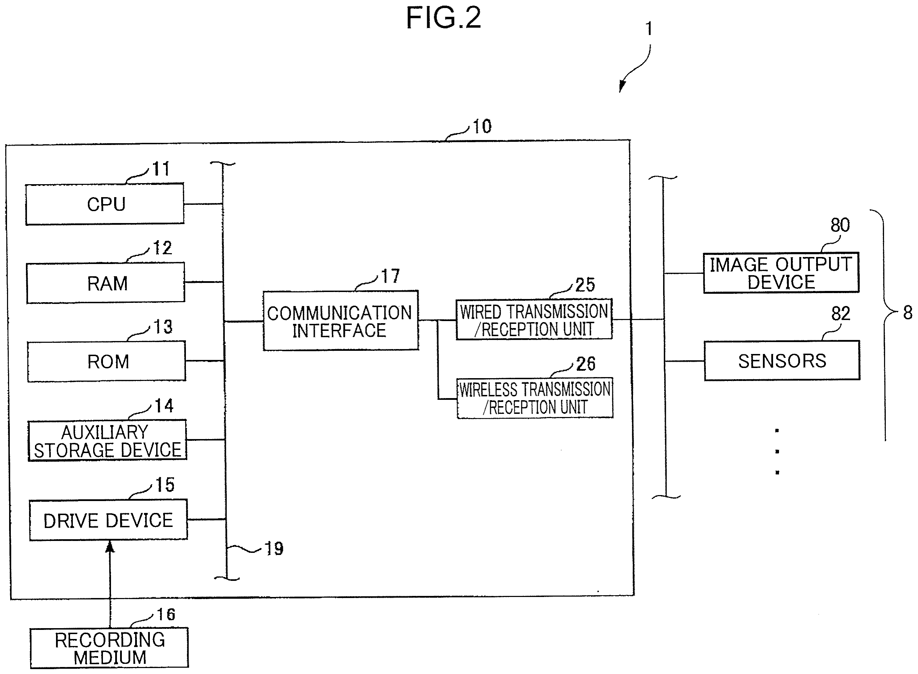

FIG. 2 is a diagram showing an example of hardware forming a control system of the work machine 1.

As shown in FIG. 2, the work machine 1 is provided with a peripheral equipment 8 and the control device 10.

The peripheral equipment 8 includes an electronically controllable device and a plurality of sensors, which are mounted on the work machine 1. The peripheral equipment 8 includes, for example, an image output device 80 which is an example of a display device, a not-graphically-shown buzzer, an audio output device, a not-graphically-shown hydraulic pressure generating device that generates hydraulic pressure for actuating the work mechanism 140, and a plurality of sensors 82 that detect respective states of operations applied to a plurality of operation members. The hydraulic pressure generating device is, for example, a hydraulic pump driven by at least one of an engine and an electric motor. If the hydraulic pump is driven by the electric motor, the hydraulic generator may include an inverter for driving the electric motor. The plurality of sensors 82 include, for example, at least a part of a gyro sensor, a GPS (Global Positioning System) sensor, a plurality of angle sensors, an acceleration sensor, an inclination sensor, a pressure sensor that detects a hydraulic pressure at a predetermined position in a not-graphically-shown hydraulic line for supplying hydraulic pressure to a required actuator from the hydraulic pressure generating device.

The image output device 80, configured to output an image captured by the image captfure device 410, is provided in the cab 122 so as to allow an operator who operates the work machine 1 to visually recognize the image. The specific configuration of the image output device 80 is arbitrary. The image output device 80 is, for example, a liquid crystal display, an organic EL (Electro-Luminescence) display, or the like. The image output device 80 may be a portable device capable of being brought into the cab 122 by an operator who operates the work machine 1, for example, a tablet terminal.

As shown in FIG. 2, the control device 10 includes a CPU (Central Processing Unit) 11, a RAM (Random Access Memory) 12, a ROM (Read Only Memory) 13, an auxiliary storage device 14, a drive device 15, which are connected to each other through a bus 19, a communication interface 17, a wired transmission/reception unit 25 and a wireless transmission/reception unit 26, these units 25 and 26 being connected to the communication interface 17.

The auxiliary storage device 14 is, for example, an HDD (Hard Disk Drive), an SSD (Solid State Drive), or the like, being a storage device that stores data related to application software or the like.

The wired transmission/reception unit 25 performs transmission and reception with other devices with use of a wired network. The wired transmission/reception unit 25 is connected with the peripheral equipment 8. A part or all of the peripheral equipment 8 may be either directly connected to the bus 19 so as to bypass the wired transmission/reception unit 25 or connected to the wireless transmission/reception unit 26.

The wireless transmission/reception unit 26 performs transmission and reception with other devices with use of a wireless network. The wireless network may be, for example, a wireless communication network of a cellular phone, the Internet, a VPN, a WAN, or the like. The wireless transmission/reception unit 26 may include at least one of a short-range wireless communication (Near Field Communication) unit, a Bluetooth (registered trademark) communication unit, a Wi-Fi (Wireless-Fidelity: registered trademark) transmission/reception unit, and an infra-red transmission/reception unit. The wireless transmission/reception unit 26 can communicate with the image capture control device 50 even when the image capture control device 50 is constituted by a server computer.

The control device 10 may be connectable to a recording medium 16 shown in FIG. 2. The recording medium 16 stores a predetermined program. The program stored in the recording medium 16 is installed in the auxiliary storage device 14 or the like of the control device 10 through the drive device 15. The predetermined programs thus installed can be executed by the CPU 11 of the control device 10. For example, the recording medium 16 may be a recording medium for optically, electrically or magnetically recording information thereon, such as a CD (Compact Disc)-ROM, a flexible disk, a magneto-optical disk, or the like, a semi-conductor memory for electrically recording information such as a ROM, a flash memory, or the like. The recording medium 16 does not include a carrier wave.

The configuration of the hardware shown in FIG. 2, for example, can also be applied to the unmanned plane 40. In other words, the control device 400 mounted on the unmanned plane 40 may have a configuration similar to the hardware configuration of the control device 10. In this case, the peripheral equipment corresponding to the peripheral equipment 8 includes the image capture device 410 shown in FIG. 1 and a plurality of sensors.

The image capture control device 50 may also have a hardware configuration substantially similar to the hardware configuration of the control device 10 shown in FIG. 2.

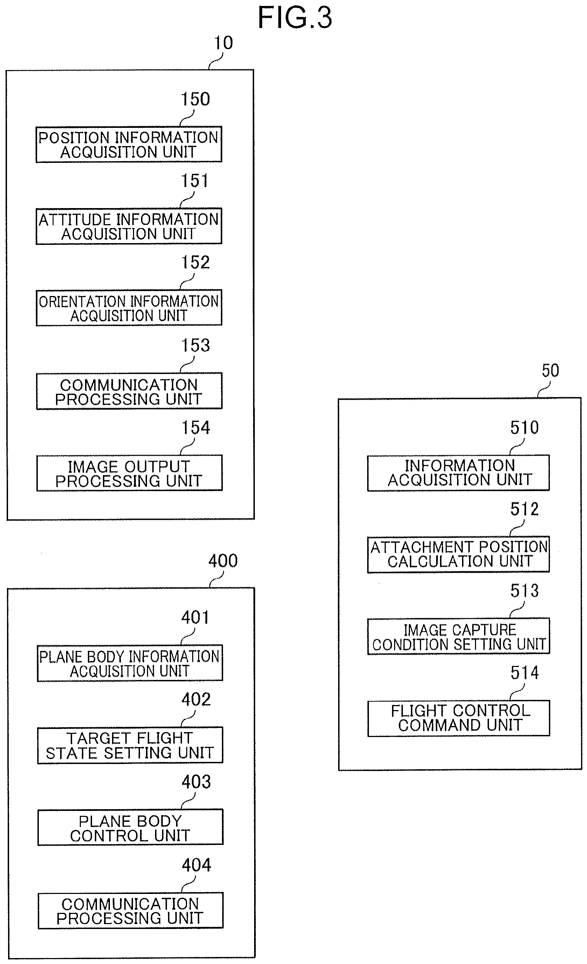

Next will be described respective functions of the control device 10, the control device 400, and the image capture control device 50 in detail with reference to FIG. 3 and subsequent figures.

The control device 10, which is mounted on the work machine 1, includes a position information acquisition unit 150, an attitude information acquisition unit 151, an orientation information acquisition unit 152, a communication processing unit 153, and an image output processing unit 154, as shown in FIG. 3. These functions are actualized by CPU 11 shown in FIG. 2 that executes the program stored in ROM 13 or other storage device.

The position information acquisition unit 150 acquires work machine position information, which is information on the position of the work machine 1, from the not-graphically-shown GPS sensor included in the plurality of sensors 82. The work machine position information is represented by latitude, longitude, and altitude. The GPS sensor includes a GPS receiver that receives radio waves from a satellite, and calculates latitude, longitude, and altitude based on the radio waves by use of interferometry or the like.

The attitude information acquisition unit 151 acquires an attitude parameter from at least one sensor that detects the attitude parameter, among the plurality of sensors 82, and acquires the work machine attitude information, which is information on the attitude of the work machine 1, based on the attitude parameter. The attitude parameter is a parameter for determining the attitude of the work machine 1. The at least one sensor for acquiring the attitude parameter includes, for example, a boom angle sensor, an arm angle sensor, a bucket angle sensor and a plane body inclination sensor. The boom angle sensor is a sensor that detects a boom angle, which is the angle of the boom 141 in the rising and falling direction to the upper turning body 120. The arm angle sensor is a sensor that detects an arm angle, which is the angle of the arm 143 to the boom 141 in the direction of the rotational movement of the arm 143. The bucket angle sensor is a sensor that detects a bucket angle, which is the angle of the crusher 145 or another tip attachment, e.g., a bucket, to the arm 143 in the direction of the rotational movement of the crusher 145 or the like. Each of the angle sensors is, for example, a rotation angle sensor that detects the rotation angle of the detection target around the rotation fulcrum (that is, a boom foot pin when the detection target is the boom 141), a stroke sensor that detects the stroke of the hydraulic cylinder for actuating the detection target (for example, the boom cylinder 142 when the detection target is the boom 141), an inclination (acceleration) sensor that detects the inclination angle of the detection target, or the like. The plane body inclination sensor is a sensor that detects a plane body inclination angle, which is, for example, the inclination angle of the upper turning body 120 to a horizontal plane.

The orientation information acquisition unit 152 acquires an orientation parameter from at least one sensor that detects the orientation parameter, among the plurality of sensors 82, and acquires, based thereon, upper turning body orientation information that is information on the orientation of the upper turning body 120 to the lower traveling body 110 (hereinafter, simply referred to as "the orientation of the upper turning body 120"). The orientation parameter is a parameter for determining the orientation of the upper turning body 120. The at least one sensor for detecting the orientation parameter is, for example, a geomagnetic sensor, a rotation angle sensor that detects the turning angle around the turning axis of the turning mechanism 130 (e.g. resolver, etc.), a gyro sensor, or the like.

The communication processing unit 153 transmits the information acquired by each of the position information acquisition unit 150, the attitude information acquisition unit 151, and the orientation information acquisition unit 152, to the image capture control device 50. The communication processing unit 153, for example, may be configured to transmit the latest information to the image capture control device 50 at a predetermined interval in response to a request from the image capture control device 50.

The communication processing unit 153 receives image data from the image capture device 410 mounted on the unmanned plane 40 through the control device 400. The image data is data of the frontward environment image captured by the image capture device 410.

The image output processing unit 154 makes the image output device 80 output the frontward environment image based on the image data acquired by the communication processing unit 153. The frontward environment image output by the image output device 80 enables an operator who operates the work machine 1 to grasp, for example, a situation of a work site which is not directly visible from the operator.

The control device 400, which is mounted on the unmanned plane 40, includes a plane body information acquisition unit 401, a target flight state setting unit 402, a plane body control unit 403, and a communication processing unit 404, as shown in FIG. 3. These functions are actualized by CPU 11 or other CPU shown in FIG. 2, which executes a program stored in ROM 13 or other storage device.

The plane body information acquisition unit 401 acquires plane body information which is information on the state of the plane body of the unmanned plane 40. The plane body information includes at least one of plane body position information that is information on the position of the unmanned plane 40 and a plane body attitude information that is information on the attitude of the unmanned plane 40. The plane body position information is represented by, for example, latitude, longitude, and altitude. The plane body position information can be acquired from the GPS sensor. The plane body attitude information includes, for example, information on respective rotation angles about the yaw axis, the roll axis and the pitch axis of the unmanned plane 40. The body attitude information, alternatively, may be acquirable also from a sensor such as an inertial measurement device (IMU: Inertial Measurement Unit) mounted on the unmanned plane 40.

The target flight state setting unit 402 sets the target flight state of the unmanned plane 40 based on the control information (command) from the image capture control device 50. The target flight state includes a target flight position and a target flight attitude. If the control information includes both the target flight position and the target flight attitude, the target flight state setting unit 402 may directly use the target flight position and the target flight attitude included in the control information.

The target flight position can be expressed by, for example, latitude, longitude, and altitude.

The plane body control unit 403 according to the present embodiment can selectively execute the following controls: a "state follow-up control" of dynamically changing the target flight position of the unmanned plane 40 in accordance with the change in the position of the image capture target; and a "hovering control" of continuously keeping the flight position of the unmanned plane 40 at the constant target flight position.

Each of the latitude and longitude of the target flight position in the state follow-up control is set to a value corresponding to a flight position that allows the image of the image capture target to be easily captured. The position of the image capture target is, for example, a position where work is being performed by the work machine 1, for example, the position of the tip attachment. The latitude and longitude of the target flight position may be changed either manually by the user or automatically in accordance with an operation mode or the like.

The altitude of the target flight position may be either constant, for example, within a range of 30m to 40m, or changed. The change may be performed either manually by the user or automatically in accordance with the operation mode or the like.

The target flight attitude, for example, can be expressed by respective rotation angles about the yaw axis, the roll axis and the pitch axis or a parameter relating to each of the rotation angles. The parameter relating to the target flight attitude may be changed either by the user or automatically in accordance with the operation mode or the like.

The plane body control unit 403 controls the flight action of the unmanned plane 40 so as to actualize the target flight state set by the target flight state setting unit 402, based on the plane body information acquired by the plane body information acquisition unit 401. Specific method for conducting such control is arbitrary; for example, may be applied PID (Proportional Integral Differential) control.

The communication processing unit 404 transmits the plane body information acquired by the plane body information acquisition unit 401, and the like, to the image capture control device 50. For example, the communication processing unit 404 may transmit the latest plane body information to the image capture control device 50 at a predetermined interval in response to a request from the image capture control device 50.

The communication processing unit 404 transmits the data of the frontward environment image captured by the image capture device 410 to the work machine 1. For example, the communication processing unit 404 may transmit data of the frontward environment image at a predetermined interval to the image capture control device 50 in response to a request from the image capture control device 50.

The image capture control device 50, as shown in FIG. 3, includes an information acquisition unit 510, an attachment position calculation unit 512, which is an example of the image capture target position calculation unit, an image capture condition setting unit 513, and a flight control command unit 514. These functions can be actualized, for example, by CPU 11 or other CPU shown in FIG. 2 which executes a program stored in the ROM 13 or other storage device shown in FIG. 2.

The information acquisition unit 510 acquires information necessary for execution of the control operation by the flight control command unit 514. The information acquisition unit 510 according to the present embodiment acquires: information on each of the position and attitude of the work machine 1 and the orientation of the upper turning body 120, namely, the work machine position information, the work machine attitude information, and the upper turning body orientation information; and plane body information that is information on the plane body of the unmanned plane 40. Each of the work machine position information, the work machine attitude information, and the upper turning body orientation information can be acquired through a signal transmitted from the communication processing unit 153 of the control device 10 mounted on the work machine 1. The plane body information can be acquired from the communication processing unit 404 of the control device 400 mounted on the unmanned plane 40.

The attachment position calculation unit 512 calculates an image capture target position, namely, a tip attachment position which is the position of the tip attachment in this embodiment, more specifically, the position of a predetermined part (e.g., the tip) of the tip attachment, based on the work machine position information, the work machine attitude information, and the upper turning body orientation information acquired by the information acquisition unit 510. The tip attachment position calculated by the attachment position calculation unit 512 only has to be a position of the image capture target relating to the work performed by the work machine 1 or a position that allows the position of the image capture target to be determined. The tip attachment position can be represented by, for example, latitude, longitude, and altitude.

The image capture condition setting unit 513 sets the image capture conditions of the image capture device 410. In this embodiment, the image capture conditions are an image capture view angle and an image capture direction.

The image capture condition setting unit 513 can change the image capture view angle of the image capture device 410 through optical means. For example, if the image capture device 410 includes an optical system for changing the image capture view angle of the image capture device 410, the image capture condition setting unit 513 can set the image capture view angle of the image capture device 410 by operating the optical system of the image capture device 410 through the communication with the communication processing unit 404.

The image capture condition setting unit 513 can set the image capture view angle of the image capture device 410 by electronic processing on the captured image generated by the image capture device 410. For example, the image capture condition setting unit 513 can set the image capture view angle of the image capture device 410 by operating the image output processing unit 154 through communication with the communication processing unit 153 mounted on the work machine 1. For example, the image capture view angle should be maximum when the image output processing unit 154 outputs the entire captured image of the image capture device 410 whereas the image capture view angle should be smaller, when the image output processing unit 154 outputs only a part of the captured image of the image capture device 410 (e.g., only the image corresponding to the pixel in the central region), than that in the case where the whole of the captured image is output. Thus, it is also possible to electronically operate the apparent view angle without operating the optical system of the image capture device 410.

The image capture condition setting unit 513, alternatively, can set the image capture view angle by a combination of the optical means and the electronic processing on the captured image.

If the image capture device 410 includes a rotating device for rotating the image capture device body, for example, the gimbal, the image capture condition setting unit 513 can change the image capture direction of the image capture device 410 by driving the rotating device of the image capture device 410.

The image capture condition setting unit 513 can set the image capture direction of the image capture device 410 by electronic processing on the captured image generated by the image capture device 410. For example, the image capture condition setting unit 513 can set the image capture direction of the image capture device 410 by operating the image output processing unit 154 through communication with the communication processing unit 153 mounted on the work machine 1. For example, the image capture condition setting unit 513 can substantially switch the image capture direction by changing the image part that is actually output from the image output processing unit 154 of the captured image generated by the image capture device 410, for example, a part corresponding to a part of the pixels in the captured image. Thus, it is possible to electronically operate the apparent image capture direction without changing the actual orientation of the image capture device 410.

The image capture condition setting unit 513, alternatively, can set the image capture direction by combination of the rotation of the image capture device body of the image capture device 410 and the electronic process on the captured image.

The flight control command unit 514 generates a control command to be transmitted to the unmanned plane 40, based on the information acquired by the information acquisition unit 510, namely, the work machine position information, the work machine attitude information, the upper turning body orientation information, and the plane body information. As described above, the control command is a command for making the target flight state setting unit 402 of the unmanned plane 40 set the target flight state.

The flight control command unit 514, when a predetermined hovering start condition is satisfied, generates a control command for making the body control unit 403 start the hovering control of the unmanned plane 40. The hovering start condition is, for example, that the unmanned plane 40 reaches a predetermined target flight position. The hovering start condition is, for example, that the unmanned plane 40 is present at an image capture allowing position, which is a position where the image capture device 410 can continue to capture the image of the image capture target even when the flight position of the unmanned plane 40 is kept at the image capture allowing position. It can be judged whether or not the unmanned plane 40 has reached the target flight position, for example, based on the plane body information acquired by the information acquisition unit 510. It can be judged whether or not the image capture device 410 is present at the image capture allowing position, based on the tip attachment position calculated by the attachment position calculation unit 512.

The flight control command unit 514, for example, can make the control device 400 perform the hovering control by keeping the control command constant so as not to change the target flight position of the unmanned plane 40. The flight control command unit 514, alternatively, can transmit a control command for starting the hovering control, for example, for specifying the mode of the flight control unit constituted by the target flight state setting unit 402 and the plane body control unit 403 to a specific mode, for example, a hovering mode, to the control device 400 to thereby make the control device 400 start the hovering control and further continue thereafter.

Although being various, the motion of the work machine 1 may be limited to a narrow range depending on the content of the work by the work machine 1. In such a case, frequently changing the target flight position of the unmanned plane 40 in response to the change in the position of the tip attachment corresponding to the image capture target position little by little within a limited range for a predetermined time may cause problems such as increasing the processing load in controlling the flight state of the unmanned plane 40 and shortening the life of the battery due to an increase in the power consumption by the unmanned plane 40.

The flight control command unit 514 according to this embodiment performs a control operation that can solve the above-described problem. Specifically, the flight control command unit 514 judges whether or not the image capture condition setting unit 513 can set a new image capture condition (at least one of the image capture view angle and the image capture direction) for making the image capture target position contained within the image capture area without changing the target flight state, when the image capture target position (the tip attachment position in this embodiment) is deviated, or is predicted to be deviated, from the image capture area of the image capture device 410 during the execution of the hovering control by the target flight state setting unit 402 and the plane body control unit 403. The flight control command unit 514 is further configured to, when judging that it is possible to set the new image capture condition, make the image capture condition setting unit 513 change the actual image capture condition to the new image capture condition and generate and output a control command for making the target flight state setting unit 402 maintain the current target flight state. This eliminates the need for changing the target flight position of the unmanned plane 40 frequently little by little when the image capture target position is varied within a limited narrow range without large movement for a predetermined time, thereby preventing processing load in the control of the flight state of the unmanned plane 40 from being increased and the battery life from shortened by an increase in power consumption by the unmanned plane 40.

On the other hand, when the change in the image capture target position is large, there can be a case where the image capture target position fails to be contained within the image capture area even with maximum change in the image capture view angle or image capture direction of the image capture device 410 while maintaining the target flight state. To cope with this situation, the flight control command unit 514 is configured to, in the case of judging that it is impossible to make the image capture target position contained within the image capture area even with the maximum change in the image capture condition by the image capture condition setting unit 513 when the image capture target position, that is, the tip attachment position calculated by the attachment position calculation unit 512 in this embodiment, is deviated, or predicted to be deviated, from the image capture area during the execution of the hovering control, generate a control command for making the target flight state setting unit 402 change the target flight state so as to make the image capture target position contained within the image capture area and input the control command to the target flight state setting unit 402. In other words, the flight control command unit 514 is configured to shift the flight control of the unmanned plane 40 to be executed by the target flight state setting unit 402 and the body control unit 403 to the state follow-up control at least temporarily. This makes it possible to continue to capture the image of the image capture target regardless of a great change in the image capture target position.

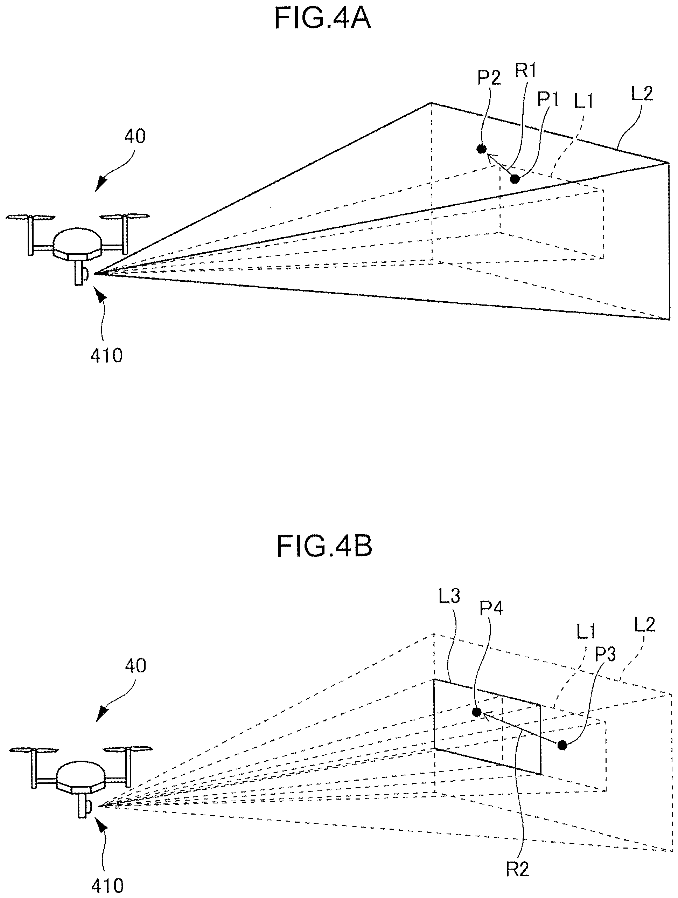

As a first example of changing the image capture condition of the image capture device 410 in response to the change in the image capture target position, FIG. 4A shows a case of changing the image capture view angle included in the image capture condition. Specifically, FIG 4A shows a change in the image capture view angle of the image capture device 410 corresponding to the change in the image capture target position during the execution of the hovering control, and a change in the image capture area of the image capture device 410 corresponding to the change in the image capture view angle. In FIG. 4A, when the image capture target position is moved from the position P1 as indicated by the arrow R1 to the position P2 outside of the image capture area L1 under a situation where the image capture target position (in this embodiment the tip attachment position) P1 is in the image capture area L1 of the image capture device 410 corresponding to the image capture view angle while the hovering control is executed to keep the flight state of the unmanned plane 40, namely, the flight position and the flight attitude, constant, the flight control command unit 514 according to the embodiment judges whether or not it is possible to make the image capture target present at the position P2 contained within the new image capture area L2 by enlarging the image view angle to change the image capture area L1 into a new image capture area L2 larger than the image capture area L1 while maintaining the current target flight state. In other words, the flight control command unit 514 judges whether or not the image capture condition setting unit 513 can determine such a new image capture view angle as to allow the position (the image capture target position that has been changed) P2 to be contained within the thus enlarged image capture area L2 by changing the image capture view angle to the new image capture view angle. When judging possible, the flight control command unit 514 makes the image capture condition setting unit 513 change the image capture view angle while preventing the target flight state setting unit 402 from changing the target flight state, thereby preventing the processing load in the control of the flight state of the unmanned plane 40 from being increased by the change in the target flight state and preventing the battery life from being shortened by an increase in the power consumption by the unmanned plane 40.

The timing of the change of the image capture view angle of the image capture device 410 (generally enlarged) is arbitrary. For example, the flight control command unit 514 may be configured to, even when the current image capture target position is contained within the image capture area L1, make the image capture condition setting unit 513 enlarge the image capture view angle of the image capture device 410 at the time when the image capture target position is predicted to be likely to be deviated from the image capture area L1. For example, the flight control command unit 514 may be configured to, when the number of pixels between the position of the image capture target and the outer edge of the image capture area L1 in the captured image is equal to or less than a predetermined number, make the image capture condition setting unit 513 switch the image capture view angle of the image capture device 410 to a wide angle to change the image capture area L1 to the new image capture area L2 capable of containing the image capture target position.

If the image capture object is, conversely, moved from the position P2 to the position P1, the image capture condition setting unit 513 may reduce the image capture view angle to change the image capture area L2 to the smaller image capture area L1.

As a second example of changing the image capture condition of the image capture device 410 in response to a change in the image capture target position, the FIG. 4B shows a case of changing the image capture direction included in the image capture condition. Specifically, FIG. 4B shows the change in the image capture direction of the image capture device 410 corresponding to the change in the image capture target position during the execution of the hovering control, and the change in the image capture area of the image capture device 410 corresponding to the change in the image capture direction.

In FIG. 4B, when the image capture target position is moved from the position P3 to the position P4 outside of the image capture area L1 as indicated by the arrow R2 under a situation where the image capture target position (in this embodiment the tip attachment position) P3 is in the image capture area L1 of the image capture device 410 corresponding to the image capture direction, while the hovering control is executed to keep the flight position of the unmanned plane 40 constant, the flight control command unit 514 according to the embodiment judges whether it is possible or impossible to make the image capture target located at the position P4 contained within the new image capture area L4, while maintaining the current target flight state, by changing the orientation of the image capture device 410 , that is, changing the image capture direction of the image capture device 410, to change the image capture area L1 into a new image capture area L3. In other words, the flight control command unit 514 judges whether or not the image capture condition setting unit 513 can determine such a new image capture direction that the position (the image capture target position that has been changed) P4 is allowed to contained within the new image capture area L3 acquired by changing the image capture direction to a new image capture direction. When judging possible, the flight control command unit 514 makes the image capture condition setting unit 513 change the image capture direction while preventing the target flight state setting unit 402 from changing the target flight state, thereby preventing the processing load in controlling the flight state of the unmanned plane 40 from being increased and preventing the battery life from being shortened by an increase in the power consumption by the unmanned plane 40.

The timing of changing the image capture direction of the image capture device 410 (the image capture angle) is arbitrary. For example, the flight control command unit 514 may be configured to, even when the current image capture target position is contained within the image capture area L1, make the image capture condition setting unit 513 change the image capture direction (image capture view angle) of the image capture device 410 at a time when the image capture target position is predicted to be likely to be deviated from the image capture area L1. For example, the flight control command unit 514 may be configured to, when the number of pixels between the position of the image capture target and the outer edge of the image capture area L1 in the captured image is equal to or less than a predetermined number, make the image capture condition setting unit 513 change the image capture direction (image capture view angle) of the image capture device 410 to change the image capture area to the new image capture area L3 capable of containing the image capture target position.

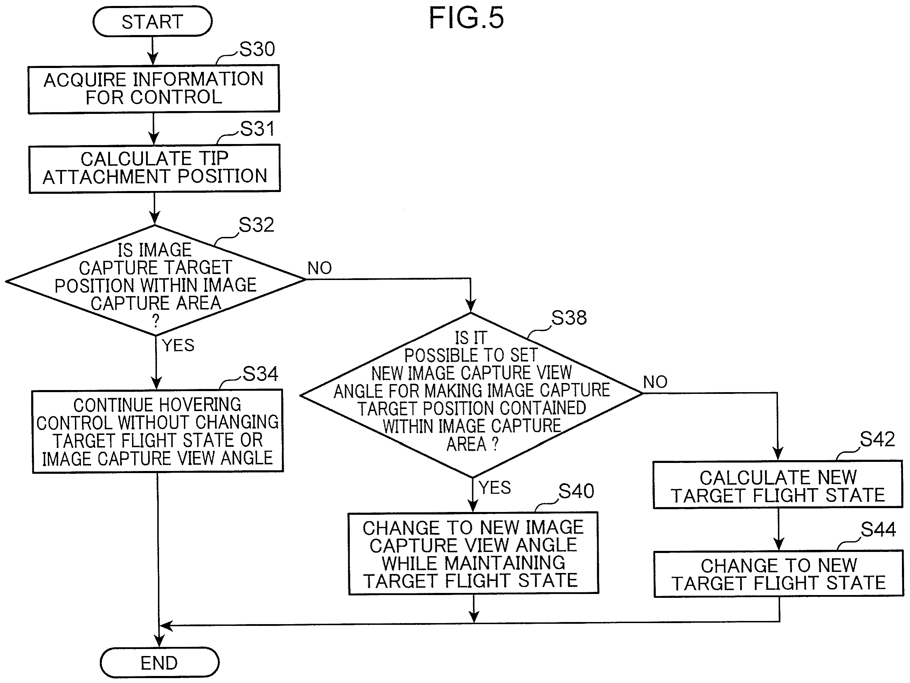

FIG. 5 is a flowchart showing the arithmetic control operation performed by the image capture control device 50 in the first example, that is, the example of changing the image capture view angle of the image capture device 410 in response to the change in the image capture target position during the execution of the hovering control. In this flowchart, the order of processing each step is changeable as long as the relationship between the input and the output of each step is not impaired. Besides, the proceeding shown in FIG. 5 may be repeated, for example, every predetermined cycle.

In step S30, the image capture control device 50 acquires information necessary for conducting the arithmetic control operation, specifically, the work machine position information, the work machine attitude information, the upper turning body orientation information, and the plane body information (about the unmanned plane 40) by use of the above-described method.

In step S31, the image capture control device 50 calculates the tip attachment position, which is an image capture target position, based on the work machine position information, the work machine attitude information and the upper turning body orientation information, which are acquired in step S30.

In step S32, the flight control command unit 514 of the image capture control device 50 judges whether or not the tip attachment position, i.e., the image capture target position, is contained within the image capture area of the image capture device 410, based on the plane body information acquired in step S30 and the tip attachment position calculated in step S31. The image capture control device 50 executes the processing of step S34 when judging that the image capture target position is contained within the image capture area (YES in step S32) or executes the processing of step S38 when judging that the image capture target position is not contained in the image capture area (NO in step S32).

In step S34, the flight control command unit 514 generates a control command for continuing the hovering control without changing either the current target flight state or the image capture view angle, and transmits the thus generated control command to the control device 400 mounted on the unmanned plane 40. In accordance with the control command, the target flight state setting unit 402 of the control device 400 maintains the current target flight state, and the body control unit 403 executes the hovering control of the unmanned plane 40 for actualizing the thus maintained target flight state. The control command for making the hovering control executed may be, for example, either a control command that is maintained from the control command that was generated in the previous control cycle or a command that directly commands the hovering control to be continued.

In step S38, the flight control command unit 514 of the image capture control device 50 judges whether or not it is possible to, if changing the image capture view angle of the image capture device 410 (e.g., the image capture view angle corresponding to the image capture area L1 shown in FIG. 4A) to the new image capture view angle (e.g., the image capture view angle corresponding to the image capture area L2 shown in FIG. 4A) while maintaining the current target flight state, make the image capture target position contained within the image capture area corresponding to a new image capture view angle, based on the plane body information on the unmanned plane 40 acquired in step S30 and the tip attachment position calculated in step S31. The image capture control device 50 executes the proceeding of step S40 when judging possible (YES in step S38), or executes the processing of step S42 in the other cases, that is, when judging that it is impossible to make the image capture target position contained within a new image capture area even with maximum change in the image capture view angle (NO in step S38).

In step S40, the flight control command unit 514 of the image capture control device 50, while maintaining the current target flight state, makes the image capture condition setting unit 513 of the image capture control device 50 change the image capture view angle of the image capture device 410 to the new image capture view angle (the image capture view angle corresponding to an image capture area capable of containing the image capture target position). This enables the image capture device 410 to continue capturing the image of the image capture object, namely, the tip attachment in this embodiment, without increasing the control load and wasting battery due to changing the target flight state.

On the other hand, in step S42, the flight control command unit 514 of the image capture control device 50 calculates the target flight state for state follow-up control, that is, a new target flight state for making the image capture target position contained within the image capture area of the image capture device 410. Specifically, the flight control command unit 514 calculates the new target flight state based on the information acquired in step S30, and generates a control command for making the target flight state setting unit 402 change the current target flight state to the new target flight state. The new target flight condition includes at least one of a new target flight position and a new target flight attitude.

Next, in step S44, the flight control command unit 514 transmits the control command generated in step S42 to the control device 400 mounted on the unmanned plane 40. The target flight state setting unit 402 of the control device 400 changes the current target flight state to the new target flight state that is specified by the control command, and makes the plane body control unit 403 of the control device 400 execute the control of the flight action of the unmanned plane 40 for actualizing the new target flight state. Until the new target flight state is set in the step S44, the plane body control unit 403 performs hovering control based on the current target flight state that has not been changed.

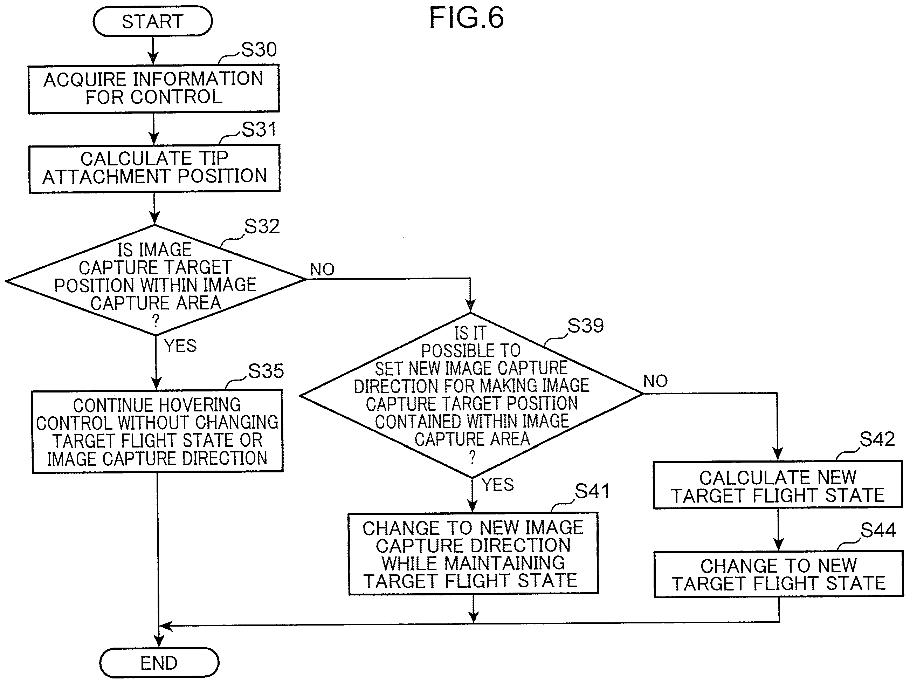

FIG. 6 is a flowchart showing the arithmetic control operation performed by the image capture control device 50 in the second example, that is, the example of changing the image capture direction of the image capture device 410 in response to the change in the image capture target position during the execution of the hovering control. The processing shown in FIG. 6 may be repeated, for example, every predetermined cycle.

In step S30, the image capture control device 50 acquires information necessary for conducting the arithmetic control operation, specifically, the work machine position information, the work machine attitude information, the upper turning body orientation information, and (about the unmanned plane 40) the plane body information, by use of the above-described method.

In step S31, the image capture control device 50 calculates the position of the tip attachment, which is the image capture target position, based on the work machine position information, the work machine attitude information, and based on the upper turning body orientation information, which are acquired in step S30.

In step S32, the flight control command unit 514 of the image capture control device 50 judges whether or not the tip attachment position, i.e., the image capture target position, is contained within the image capture area of the image capture device 410, based on the plane body information acquired in step S30 and the tip attachment position calculated in step S31. The image capture control device 50 executes the proceeding of step S35 when judging that the image capture target position is contained within the image capture area (YES in step S32), or executes the processing of step S39 when judging that the image capture target position is not contained in the image capture area (NO in step S32).

In step S35, the flight control command unit 514 generates a control command for actualizing hovering without changing either the current target flight state or the image capture direction, and transmits the thus generated control command to the control device 400 mounted on the unmanned plane 40. In accordance with the control command, the target flight state setting unit 402 of the control device 400 maintains the current target flight state, and the body control unit 403 executes the hovering control of the unmanned plane 40 for actualizing the thus maintained target flight state. The control command for making the hovering control executed may be, for example, either a control command that is maintained from the control command that was generated in the previous control cycle or a command that directing commands the hovering control to be continued.

In the step S39, the flight control command unit 514 of the image capture control device 50 judges whether or not it is possible to make the image capture object contained within the image capture area corresponding to a new image capture direction if changing the image capture direction of the image capture device 410 (e.g., the image capture direction corresponding to the image capture area L1 shown in FIG. 4B) to the new image capture direction (e.g., the image capture direction corresponding to the image capture area L3 shown in FIG. 4B) while maintaining the current target flight state, based on the plane body information on the unmanned plane 40 acquired in step S30 and the tip attachment position calculated in step S31. The image capture control device 50 executes the proceeding of step S41 when judging possible (YES in step S39), or executes the processing of step S42 in the other cases, that is, when judging that it is impossible to make the image capture target position contained within the new image capture area even with maximum change in the image capture direction (NO in step S39).

In step S41, the flight control command unit 514 of the image capture control device 50 makes the image capture condition setting unit 513 of the image capture control device 50 change the image capture direction (image capture view angle) of the image capture device 410 to a new image capture direction (the image capture direction corresponding to the image capture area capable of containing the image capture target position) while maintaining the current target flight state. This enables the image capture device 410 to continue capturing the image of the image capture object (the tip attachment, in this embodiment) without either increasing the control load or wasting battery due to changing the target flight state.

On the other hand, in step S42, the flight control command unit 514 of the image capture control device 50 calculates the target flight state for state follow-up control, that is, a new target flight state for making the image capture target position contained within the image capture area of the image capture device 410. Specifically, the flight control command unit 514 calculates the new target flight state based on the information acquired in step S30, and generates a control command for making the target flight state setting unit 402 change the current target flight state to the new target flight state. The new target flight state includes at least one of a new target flight position and a new target flight attitude.

Next, in step S44, the flight control command unit 514 transmits the control command generated in step S42 to the control device 400 mounted on the unmanned plane 40. The target flight state setting unit 402 of the control device 400 changes the current target flight state to a new target flight state specified by the control command, and the plane body control unit 403 of the control device 400 executes a control of the flight action of the unmanned plane 40 for actualizing the new target flight state. Until the new target flight state is set in step S44, the body control unit 403 performs the hovering control based on the target flight state that has not been changed.

Although the preferred embodiment has been described above in detail, the present invention is not limited to the preferred embodiment, and various modifications and variations are possible within the scope of the claims. It is also possible to combine the components according to the above-described embodiments with each other.

For example, although the attachment position calculation unit 512 according to the embodiment calculates the image capture target position (that is, the tip attachment position in the embodiment) based on the work machine position information, the work machine attitude information, and the upper turning body orientation information, which are acquired by the information acquisition unit 510, the image capture target position can be calculated (recognized) also through image processing based on a current captured image generated by the image capture device 410 and a past captured image. The attachment position calculation unit 512, for example, may be configured to acquire the captured image that the image capture device 410 generates by communication processing through the communication processing unit 404 and to recognize the position of the tip attachment contained in the captured image as the image capture target position or to recognize the position of the tip attachment not contained in the captured image as the image capture target position. Specifically, the position of the tip attachment (the image capture target position) can be recognized based on, for example, a captured image generated by the image capture device 410, the target flight state (the flight position and the flight attitude) specified by the flight control command unit 514 at the time of image capture by the image capture device 410, and the image capture view angle and the image capture direction set by the image capture condition setting unit 513 at the time of image capture by the image capture device 410.

In the case where the image capture target position is thus calculated by image processing based on the captured image by the image capture device 410, the marker may be attached to the image capture position. The position, size, and form of the marker are arbitrary. For example, the marker may be a circle having a diameter of about 30cm.

When the image capture target position is, for example, the position on the top surface of the distal end of the arm 143, the marker may be provided to the position. The marker provided at such a position has an advantage of capable of being always easily captured by the image capture device 410. For example, since the tip attachment such as the crusher 145 or the like attached to the distal end of the arm 143 is swung up and down during the building demolition work, the marker, if provided to the tip attachment, is likely to fail to be captured by the image capture device 410 during the work. On the other hand, the arm 143, which is less frequently swung greatly than the tip attachment, allows the marker provided thereon to be always easily captured by the image capture device 410. Besides, the target flight position for the hovering control of the unmanned plane 40 during disassembly work is basically present above the tip attachment and the arm 143, which also allows the position of the upper surface of the arm 143 to be suitable for the marker. Furthermore, in order to be simultaneously imaged by the image capture device 410 with the target of the disassembly work, i.e., the part being disassembled, the marker is preferably provided at the distal end of the arm 143 that is close to the tip attachment.

As described above, there is provided an apparatus for supporting work performed by a work machine, the apparatus including a flying object and an image capture device mounted on the flying object and being capable of continuously capturing an image of a specific place with low frequency of changing the flight state of the flying object.

Provided is a work support apparatus for supporting work performed by a work machine that includes a lower traveling body and an upper turning body mounted on the lower traveling body. The work support apparatus includes a flying object, an image capture device, an information acquisition unit, an image capture target position calculation unit, an image capture condition setting unit, a flying object control unit, and a flight control command unit. The flying object is capable of flying over the air. The image capture device is mounted on the flying object and captures an image of the work machine. The information acquisition unit acquires work machine information that is information on a state of the work machine and flying object information that is information on a state of the flying object. The image capture target position calculation unit calculates the position of an image capture target to be imaged by the image capture device. The image capture condition setting unit sets an image capture condition of the image capture device so as to allow an image of the image capture target that is located at the image capture target position to be captured. The image capture condition is at least one of an image capture view angle and an image capture direction. The flying object control unit is capable of performing hovering control to keep the flying object in a target flight state based on the flying object information acquired by the information acquisition unit. The flight control command unit imparts a control command to the flying object control unit based on the work machine information and the flying object information, which are acquired by the information acquisition unit, and the image capture target position. The flight control command unit is configured to judge whether or not it is possible to determine a new image capture condition for making the image capture target position contained within the image capture area without changing the target flight state when the image capture target position calculated by the image capture target position calculation unit is deviated, or predicted to be deviated, from the image capture area of the image capture device during execution of the hovering control by the flying object control unit, and configured to make the image capture condition setting unit change the actual image capture condition into the new image capture condition and to make the flying object control unit maintain the current target flight state when judging that it is possible to determine the new image capture condition.

In this apparatus, even when the image capture target position is changed, if it is possible to set such a new image capture condition as to allow the thus changed image capture target position to be contained within the image capture area, the flight control command unit makes the image capture condition setting unit perform the change to the new image capture condition without changing the target flight state, thereby effectively preventing disadvantages such as an increase in the control processing load due to the change in the target flight state and shortening the life of the battery due to power consumption by the flying object.

It is preferable that the flight control command unit is configured to make the flying object control unit change the target flight state when judging that it is impossible to make the image capture target position contained in the image capture area even with maximum change in the image capture condition when the position of the image capture target calculated by the image capture target position calculation unit is deviated, or predicted to be deviated, from the image capture area of the image capture device during the execution of the hovering control by the flying object control unit. Such selection between changing the image capture condition and changing the target flight state according to the magnitude of the change in the image capture target position allows the image of the image capture target to be captured in response to the change in the image capture target position with restrained control processing load and restrained power consumption by the flying object.

The target flight state preferably includes at least one of a target flight position and a target flight attitude of the flying object, and more preferably includes both the target flight position and the target flight attitude.

The image capture target position calculation unit can calculate the position of the image capture target based on, for example, the work machine information acquired by the information acquisition unit.

The image capture target position calculation unit, alternatively, can calculate the position of the image capture target through image recognition based on the image captured by the image capture device.

The image capture condition setting unit can change the image capture view angle of the image capture device by, for example, optical means.

The image capture condition setting unit, alternatively, can change the image capture view angle of the image capture device by electronic processing on the image captured by the image capture device.

The image capture condition setting unit, for example, can change the image capture direction of the image capture device by rotating the image capture device.

The image capture condition setting unit, alternatively, can change the image capture direction of the image capture device by electronic processing on the image capture image of the image capture device.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A system for supporting work of a work machine (140) including a lower traveling body (110) and an upper turning body (120) mounted on the lower traveling body (110), the system comprising:
a flying object (40) capable of flying over the sky;
an image capture device (410) mounted on the flying object (40) and configured to capture an image of the work machine (140);
a flying object control device (400) comprising a flying object control unit (403) adapted to execute hovering control for keeping the flying object (40) in a target flight state; and
an image capture control device (50) configured to control image capturing of the image capturing device (410), the image capture control device (50) comprising:
an information acquisition unit (510) adapted to acquire work machine information, which is information on a state of the work machine (140), and flying object information, which is information on a state of the flying object;
an image capture target position calculation unit (512) adapted to calculate a position of an image capture target to be imaged by the image capture device (410), wherein the image capture target is a predetermined part of the work machine (140);
an image capture condition setting unit (513) adapted to set an image capture condition of the image capture device (410) so as to allow an image of the image capture target that is located at the position of the image capture target to be captured by the image capture device (410), the image capture conditions being at least one of an image capture view angle and an image capture direction; and
a flight control command unit (514) adapted to impart a control command to the flying object control unit (403) based on the work machine information and the flying object information, which are acquired by the information acquisition unit (510), and the image capture target position,
**characterized in that**
the flight control command unit (514) is configured to judge whether or not it is possible to determine a new image capture condition for making the image capture target position contained within an image capture area of the image capture device (410) without changing the target flight state when the image capture target position calculated by the image capture target position calculation unit (512) is deviated, or predicted to be deviated, from the image capture area of the image capture device (410) during execution of the hovering control by the flying object control unit (403),
wherein the flight control command unit (514) is configured to make the image capture condition setting unit (513) change the actual image capture condition into the new image capture condition and to make the flying object control unit (403) maintain the current target flight state when judging that it is possible to determine the new image capture condition, and
is configured to make the flying object control unit (403) change the target flight state when judging that it is impossible to make the image capture target position contained in the image capture area even with maximum change in the image capture condition.

2. The system according to claim 1, wherein the target flight state includes at least one of a target flight position and a target flight attitude of the flying object (40).

3. The system according to claim 1 or 2, wherein the image capture target position calculation unit (512) is adapted to calculate a position of the image capture target based on the work machine information acquired by the information acquisition unit (510).

4. The system according to claim 1 or 2, wherein the image capture target position calculation unit (512) is adapted to calculate a position of the image capture target through image recognition based on the image captured by the image capture device (410).

5. The system according to any one of claims 1 to 4, wherein the image capture condition setting unit (513) is adapted to change the image capture view angle of the image capture device (410) by optical means.

6. The system according to any one of claims 1 to 4, wherein the image capture condition setting unit (513) is adapted to change the image capture view angle of the image capture device (410) by electronic processing on the image captured by the image capture device (410).

7. The system according to any one of claims 1 to 6, wherein the image capture condition setting unit (513) is adapted to change the image capture direction of the image capture device (410) by rotating the image capture device (410).

8. The system according to any one of claims 1 to 6, wherein the image capture condition setting unit (513) is adapted to change the image capture direction of the image capture device (410) by electronic processing on the image captured by the image capture device (410).

## Patentansprüche

1. System zur Unterstützung einer Arbeit einer Arbeitsmaschine (140), die einen unteren Fahrkörper (110) und einen oberen Drehkörper (120), der auf dem unteren Fahrkörper (110) angebracht ist, umfasst, wobei das System umfasst:
ein Flugobjekt (40), das in der Lage ist, im Luftraum zu fliegen;
eine Bildaufnahmevorrichtung (410), die an dem Flugobjekt (40) angebracht ist und konfiguriert ist, ein Bild der Arbeitsmaschine (140) aufzunehmen;
eine Flugobjektsteuerungsvorrichtung (400), die eine Flugobjektsteuerungseinheit (403) umfasst, die eingerichtet ist, eine Schwebesteuerung auszuführen, um das Flugobjekt (40) in einem Sollflugzustand zu halten; und
eine Bildaufnahmesteuerungsvorrichtung (50), die konfiguriert ist, eine Bildaufnahme der Bildaufnahmevorrichtung (410) zu steuern, wobei die Bildaufnahmesteuerungsvorrichtung (50) umfasst:
eine Informationsbeschaffungseinheit (510), die eingerichtet ist, Arbeitsmaschineninformationen, die Informationen über einen Zustand der Arbeitsmaschine (140) sind, und Flugobjektinformationen zu beschaffen, die Informationen über einen Zustand des Flugobjekts sind;
eine Bildaufnahmezielpositionsberechnungseinheit (512), die eingerichtet ist, eine Position eines Bildaufnahmeziels zu berechnen, das durch die Bildaufnahmevorrichtung (410) abzubilden ist, wobei das Bildaufnahmeziel ein vorbestimmter Teil der Arbeitsmaschine (140) ist;
eine Bildaufnahmebedingungseinstellungseinheit (513), die eingerichtet ist, eine Bildaufnahmebedingung der Bildaufnahmevorrichtung (410) einzustellen, um es zu erlauben, dass ein Bild des Bildaufnahmeziels, das bei der Position des Bildaufnahmeziels angeordnet ist, durch die Bildaufnahmevorrichtung (410) aufgenommen wird, wobei die Bildaufnahmebedingungen zumindest eines aus einem Bildaufnahmeblickwinkel und einer Bildaufnahmerichtung sind; und
eine Flugsteuerungsbefehlseinheit (514), die eingerichtet ist, einen Steuerungsbefehl zu der Flugobjektsteuerungseinheit (403) auf der Grundlage der Arbeitsmaschineninformationen und der Flugobjektinformationen, die durch die Informationsbeschaffungseinheit (510) beschafft werden, und der Bildaufnahmezielposition weiterzugeben, **dadurch gekennzeichnet, dass**
die Flugsteuerungsbefehlseinheit (514) konfiguriert ist, zu beurteilen, ob es möglich ist oder nicht, eine neue Bildaufnahmebedingung zu bestimmen, um zu erreichen, dass die Bildaufnahmezielposition innerhalb eines Bildaufnahmebereichs der Bildaufnahmevorrichtung (410) beinhaltet ist, ohne den Sollflugzustand zu ändern, wenn die Bildaufnahmezielposition, die durch die Bildaufnahmezielpositionsberechnungseinheit (512) berechnet wird, von dem Bildaufnahmebereich der Bildaufnahmevorrichtung (410) während einer Ausführung der Schwebsteuerung durch die Flugobjektsteuerungseinheit (403) abgewichen ist, oder es vorausgesagt wird, dass sie davon abgewichen ist,
wobei die Flugsteuerungsbefehlseinheit (514) konfiguriert ist, die Bildaufnahmebedingungseinstellungseinheit (513) zu veranlassen, die tatsächliche Bildaufnahmebedingung in eine neue Bildaufnahmebedingung zu ändern, und die Flugobjektsteuerungseinheit (403) zu veranlassen, den derzeitigen Sollflugzustand beizubehalten, wenn beurteilt wird, dass es möglich ist, die neue Bildaufnahmebedingung zu bestimmen, und
konfiguriert ist, die Flugobjektsteuerungseinheit (403) zu veranlassen, den Sollflugzustand zu ändern, wenn beurteilt wird, dass es unmöglich ist, auch mit einer maximalen Änderung in der Bildaufnahmebedingung zu erreichen, dass die Bildaufnahmezielposition in dem Bildaufnahmebereich beinhaltet ist.

2. System nach Anspruch 1, wobei der Sollflugzustand zumindest eine aus einer Sollflugposition und einer Sollflughöhe des Flugobjekts (40) umfasst.

3. System nach Anspruch 1 oder 2, wobei die Bildaufnahmezielpositionsberechnungseinheit (512) eingerichtet ist, eine Position des Bildaufnahmeziels auf der Grundlage der Arbeitsmaschineninformationen, die durch die Informationsbeschaffungseinheit (510) beschafft werden, zu berechnen.

4. System nach Anspruch 1 oder 2, wobei die Bildaufnahmezielpositionsberechnungseinheit (512) eingerichtet ist, eine Position des Bildaufnahmeziels durch eine Bilderkennung, die auf dem Bild beruht, das durch die Bildaufnahmevorrichtung (410) aufgenommen wird, zu berechnen.

5. System nach einem der Ansprüche 1 bis 4, wobei die Bildaufnahmebedingungseinstellungseinheit (513) eingerichtet ist, den Bildaufnahmeblickwinkel der Bildaufnahmevorrichtung (410) durch eine optische Einrichtung zu ändern.

6. System nach einem der Ansprüche 1 bis 4, wobei die Bildaufnahmebedingungseinstellungseinheit (513) eingerichtet ist, den Bildaufnahmeblickwinkel der Bildaufnahmevorrichtung (410) durch eine elektronische Verarbeitung bei dem Bild zu ändern, das durch die Bildaufnahmevorrichtung (410) aufgenommen wird.

7. System nach einem der Ansprüche 1 bis 6, wobei die Bildaufnahmebedingungseinstellungseinheit (513) eingerichtet ist, die Bildaufnahmerichtung der Bildaufnahmevorrichtung (410) zu ändern, indem die Bildaufnahmevorrichtung (410) gedreht wird.

8. System nach einem der Ansprüche 1 bis 6, wobei die Bildaufnahmebedingungseinstellungseinheit (513) eingerichtet ist, die Bildaufnahmerichtung der Bildaufnahmevorrichtung (410) durch eine elektronische Verarbeitung bei dem Bild zu ändern, das durch die Bildaufnahmevorrichtung (410) aufgenommen wird.

## Revendications

1. Système destiné à supporter le travail d'une machine de travail (140) comprenant un corps mobile inférieur (110) et un corps tournant supérieur (120) monté sur le corps mobile inférieur (110), le système comprenant :
un objet volant (40) pouvant voler dans le ciel ;
un dispositif de capture d'image (410) monté sur l'objet volant (40) et conçu pour capturer une image de la machine de travail (140) ;
un dispositif de commande d'objet volant (400) comprenant une unité de commande d'objet volant (403) conçue pour exécuter une commande de vol stationnaire pour maintenir l'objet volant (40) dans un état de vol cible ; et
un dispositif de commande de capture d'image (50) conçu pour commander la capture d'image du dispositif de capture d'image (410), le dispositif de commande de capture d'image (50) comprenant :
une unité d'acquisition d'informations (510) conçue pour acquérir des informations de machine de travail, qui sont des informations sur l'état de la machine de travail (140), et des informations d'objet volant, qui sont des informations sur l'état de l'objet volant ;
une unité de calcul de position de cible de capture d'image (512) conçue pour calculer la position d'une cible de capture d'image à imager par le dispositif de capture d'image (410), la cible de capture d'image étant une partie prédéfinie de la machine de travail (140) ;
une unité de réglage de condition de capture d'image (513) conçue pour régler une condition de capture d'image du dispositif de capture d'image (410) de sorte à permettre à une image de la cible de capture d'image qui est située à la position de la cible de capture d'image d'être capturée par le dispositif de capture d'image (410), les conditions de capture d'image étant au moins l'une d'un angle de vue de capture d'image et d'une direction de capture d'image ; et
une unité d'instruction de commande de vol (514) conçue pour transmettre une instruction de commande à l'unité de commande d'objet volant (403) sur la base des informations de machine de travail et des informations d'objet volant, qui sont acquises par l'unité d'acquisition d'informations (510), et la position cible de capture d'image,
**caractérisé en ce que**
l'unité d'instruction de commande de vol (514) est conçue pour juger s'il est possible ou non de déterminer une nouvelle condition de capture d'image pour atteindre la position cible de capture d'image contenue dans une zone de capture d'image du dispositif de capture d'image (410) sans modifier l'état de vol cible lorsque la position cible de capture d'image calculée par l'unité de calcul de position cible de capture d'image (512) est déviée, ou prévue pour être déviée, de la zone de capture d'image du dispositif de capture d'image (410) pendant l'exécution de la commande de vol stationnaire par l'unité de commande d'objet volant (403),
l'unité d'instruction de commande de vol (514) étant conçue pour amener l'unité de réglage de condition de capture d'image (513) à modifier la condition de capture d'image actuelle en nouvelle condition de capture d'image et pour amener l'unité de commande d'objet volant (403) à maintenir l'état de vol cible actuel lorsqu'elle juge qu'il est possible de déterminer la nouvelle condition de capture d'image, et
étant conçue pour amener l'unité de commande d'objet volant (403) à modifier l'état de vol cible lorsqu'elle juge qu'il est impossible d'atteindre la position cible de capture d'image contenue dans la zone de capture d'image, même en modifiant au maximum la condition de capture d'image.

2. Système selon la revendication 1, l'état de vol cible comprenant au moins une position de vol cible et une attitude de vol cible de l'objet volant (40).

3. Système selon la revendication 1 ou 2, l'unité de calcul de position de cible de capture d'image (512) étant conçue pour calculer une position de la cible de capture d'image sur la base des informations de machine de travail acquises par l'unité d'acquisition d'informations (510).

4. Système selon la revendication 1 ou 2, l'unité de calcul de position de cible de capture d'image (512) étant conçue pour calculer une position de la cible de capture d'image par reconnaissance d'image sur la base de l'image capturée par le dispositif de capture d'image (410).

5. Système selon l'une quelconque des revendications 1 à 4, l'unité de réglage de condition de capture d'image (513) étant conçue pour modifier l'angle de vue de capture d'image du dispositif de capture d'image (410) par des moyens optiques.

6. Système selon l'une quelconque des revendications 1 à 4, l'unité de réglage de condition de capture d'image (513) étant conçue pour modifier l'angle de vue de capture d'image du dispositif de capture d'image (410) par traitement électronique de l'image capturée par le dispositif de capture d'image (410).

7. Système selon l'une quelconque des revendications 1 à 6, l'unité de réglage de condition de capture d'image (513) étant conçue pour changer la direction de capture d'image du dispositif de capture d'image (410) en faisant tourner le dispositif de capture d'image (410).

8. Système selon l'une quelconque des revendications 1 à 6, l'unité de réglage de condition de capture d'image (513) étant conçue pour modifier la direction de capture d'image du dispositif de capture d'image (410) par traitement électronique de l'image capturée par le dispositif de capture d'image (410).
